# EUROPÄISCHE PATENTSCHRIFT

(11) **EP 2 714 607 B1**
(45) Veröffentlichungstag und Bekanntmachung des Hinweises auf die Patenterteilung: **03.02.2016**
(21) Anmeldenummer: 12727124.5
(22) Anmeldetag: 30.05.2012
(51) Int. Cl.: C03C 17/00, C03C 17/245, C23C 16/453

(54) **VERFAHREN UND VORRICHTUNG ZUM BESCHICHTEN EINES FLOATGLASBANDES**
METHOD AND DEVICE FOR COATING A FLOAT GLASS STRIP
PROCÉDÉ ET DISPOSITIF DESTINÉS À REVÊTIR UN RUBAN DE VERRE FLOTTÉ

(30) Priorität: 31.05.2011 DE 102011076830
(43) Veröffentlichungstag der Anmeldung: 09.04.2014
(73) Patentinhaber: Innovent e.V., 07745 Jena (DE)
(72) Erfinder: GRÜNLER, Bernd, 07937 Zeulenroda (DE); HEFT, Andreas, 07545 Gera (DE); STRUPPERT, Thomas, 96450 Coburg (DE); RÜFFER, Paul, 07745 Jena (DE)
(74) Vertreter: Liedtke, Markus
(86) Internationale Anmeldenummer: PCT/EP2012/060170
(87) Internationale Veröffentlichungsnummer: WO 2012/163977

(56) Entgegenhaltungen:
- WO-A1-2009/007745
- WO-A2-2012/038718
- DE-A1- 4 237 921
- US-A- 5 203 903
- US-A- 5 395 698
- US-A- 5 745 291
- US-A1- 2003 215 648
- US-B1- 6 238 738
- US-B1- 6 444 898
- US-B1- 6 447 921

## Beschreibung

Die Erfindung betrifft ein Verfahren zum Beschichten eines Floatglasbandes gemäß dem Oberbegriff des Anspruchs 1 und eine Vorrichtung zum Beschichten eines Floatglasbandes gemäß dem Oberbegriff des Anspruchs 10.

Um die Oberflächeneigenschaften verschiedener Substrate zu beeinflussen, sind seit geraumer Zeit Beschichtungsverfahren gebräuchlich, bei denen Beschichtungsstoffe aus einer Gasphase auf einer Oberfläche abgeschieden werden. Dabei wird unter anderem zwischen chemischen und physikalischen Gasphasenabscheidungen unterschieden. Bei den chemischen Verfahren werden meist so genannte Precursoren, Vorläuferstoffe der Beschichtungsstoffe, mittels Energiezuführung umgesetzt, Reaktionsprodukte der Precursoren auf die Oberfläche geleitet und dort abgelagert. Die Energiezuführung kann beispielsweise mittels Beflammung erfolgen. Der der Flamme zugeführte Precursor bildet bei seiner thermischen Umsetzung Partikel, insbesondere Nanopartikel, die noch in der Flamme agglomerieren und sich dann an der Oberfläche absetzen. Auf diese Weise ist eine homogene und dichte Beschichtung möglich, jedoch unter hohem Energieeinsatz. Eine andere Möglichkeit bieten so genannte Niederdruckplasmaverfahren, bei denen der Precursor in einer Plasmaquelle oder in deren räumlicher Nähe auf den zu beschichtenden Oberflächen zu Dünnschichten umgesetzt wird. Dieses energetisch vorteilhafte Verfahren benötigt allerdings evakuierte Prozesskammern und ist daher aufwändig und unflexibel.

Seit einigen Jahren sind so genannte Normaldruckplasmaverfahren bekannt geworden, bei denen die zu beschichtenden Oberflächen nicht in ein Vakuum eingebracht werden müssen. Die Partikelbildung erfolgt hierbei schon im Plasma. Die Größe der dabei entstehenden Agglomerate und somit wesentliche Eigenschaften der Beschichtung lassen sich unter anderem durch den Abstand der Plasmaquelle von der Oberfläche einstellen. Die Homogenität der abgeschiedenen Schichten ist, eine geeignete Führung des Substrats vorausgesetzt, mit der Homogenität durch Beflammung abgeschiedener Schichten vergleichbar, der erforderliche Energieeintrag ist jedoch wesentlich geringer.

Die Veredelung von Glasoberflächen mittels PVD-Verfahren (physical vapor deposition - physikalische Gasphasenabscheidung) ist seit langem bekannt. Durch Beschuss von Atomen eines Materials mit hochenergetischen Edelgasionen (Sputter-Prozess) ist es möglich, diese aus dem Verbund herauszureißen und auf dem Substrat (Flachglasscheiben der Größe ca. 3x6 m²) abzuscheiden.

Zum Abscheiden von Schichten wird häufig das Sputterverfahren eingesetzt. Dies geht jedoch mit einem sehr aufwendigen und zugleich sehr kostenintensiven Apparaturaufbau einher, da niedrige Drücke und/oder spezielle Atmosphären benötigt werden.

Bekannt sind auch Verfahren, bei denen metallorganische und/oder metallanorganische Verbindungen (Precursor) in eine Flamme eingebracht, durch Verbrennungsprozesse zersetzt und auf einer Oberfläche abgeschieden wurden. Diese Verfahren werden als C-CVD-Verfahren (combustion chemical vapor deposition - verbrennungsbasierte chemische Gasphasenabscheidung) oder Flammenpyrolyseverfahren bezeichnet. Ein solches Verfahren zur Beschichtung von heißen Glasoberflächen ist in der DE 10 2006 029 617 A1 offenbart.

Aus der DE 42 37 921 A1 ist ein Verfahren zum Modifizieren der Oberflächenaktivität, wie Hydrophilieren, eines Silicatglassubstrates durch Aufbringen einer siliciumhaltigen Beschichtung unter Verwendung wenigstens einer siliciumorganischen Substanz bekannt, wobei die siliciumhaltige Beschichtung durch flammenpyrolytische Zersetzung der siliciumorganischen Substanz(en) als SiOx-Beschichtung aufgebracht wird. Als Glassubstrat kann ein Floatglasband in erzeugungswarmem Zustand beschichtet werden. Dabei ist eine Anzahl von Stabbrennern nacheinander entlang einer auf eine Floatglaswanne folgenden Transporteinrichtung für das Floatglasband angeordnet. Die Beschichtung des Floatglasbandes erfolgt auf einer Unterseite des Floatglases, die ein Zinnbad durchlaufen hat. Diese wird aufgrund ihrer schlechten Benetzbarkeit mittels einer in den Floatglasproduktionsprozess integrierten Apparatur mit einer aus mindestens zwei Einzelschichten bestehenden SiOₓ-Schicht hydrophiliert.

Aus der WO 2009/007745 A1 ist bekannt, während eines Floatglas- oder Walzglas-Herstellungs-Prozesses antireflektive Silica-Schichten mittels eines Flammenpyrolyse-Abscheidungs-Prozesses, der bevorzugt ein verbrennungsbasierter chemischer Dampfphasen-Abscheidungs-Prozess ist, auf dem Glasband abzuscheiden. Die temperatur des Bandes ist höher als 200 °C. Der Prozess kann in der Lücke zwischen dem Float-Bad oder Walzen und der Kühlbahn durchgeführt werden. Die Beständigkeit der Beschichtung kann durch Sintern erhöht werden. Die Vorrichtung umfasst bevorzugt eine eine Auszieheinheit, die in der Nähe jedes Brennerkopfes angeordnet ist. In einer weiteren Ausführungsform wird zusätzlicher Sauerstoff in den Dampfphasen-Abscheidungs-Prozess eingebracht, um eine Beschichtung mit einem niedrigeren effektiven Brechungsindex zu erzeugen.

Der Erfindung liegt die Aufgabe zu Grunde, ein verbessertes Verfahren und eine verbesserte Vorrichtung zum Beschichten eines Floatglasbandes anzugeben.

Die Aufgabe wird erfindungsgemäß gelöst durch ein Verfahren mit den Merkmalen des Anspruchs 1 und durch eine Vorrichtung mit den Merkmalen des Anspruchs 10.

Bei einem erfindungsgemäßen Verfahren zum Beschichten eines Floatglasbandes im Anschluss an dessen Herstellungsprozess wird das Floatglasband aus einer Floatglaswanne durch eine Fördereinrichtung transportiert, in der das Floatglasband abkühlt und/oder abgekühlt wird, wobei eine Beschichtung in mindestens zwei Gruppen von nacheinander entlang der Fördereinrichtung angeordneten Beschichtungseinrichtungen erfolgt. Jede der Gruppen umfasst mindestens eine Beschichtungseinrichtung. Durch jede der Gruppen wird eine Beschichtung in einem Bereich des Floatglasbandes durchgeführt, in dem eine Temperatur des Floatglasbandes in einem Temperaturbereich liegt, der von den Temperaturbereichen des Floatglasbandes im Bereich der anderen Gruppe oder Gruppen verschieden ist.

Die Gruppen können beispielsweise je eine Beschichtungseinrichtung oder zwei oder mehr Beschichtungseinrichtungen umfassen.

Die Fördereinrichtung für das Floatglasband kann eine erhebliche Länge, beispielsweise 200 m, aufweisen. Das zunächst noch erzeugungswarme Floatglas kühlt auf dieser Strecke von einer Temperatur von etwa 650 °C meist bis auf Raumtemperatur ab oder wird aktiv gekühlt, beispielsweise durch Lüfter. Die Kühlung erfolgt so, dass sich im Floatglasband ein Temperaturabfall von nur wenigen Kelvin pro Meter ergibt, um Verspannungen im Floatglas zu vermeiden. Daher bleibt das Floatglas über lange Strecken von mehreren Metern im Wesentlichen im gleichen Temperaturbereich. Dementsprechend sind die Gruppen von Beschichtungseinrichtungen erfindungsgemäß in einem Abstand von mehreren Metern zueinander angeordnet, um eine Beschichtung in voneinander verschiedenen Temperaturbereichen zu erzielen.

Durch die Integration des erfindungsgemäßen Verfahrens und der erfindungsgemäßen Vorrichtung in Anlagen zur Produktion von Floatglas können aufwendige und kostenintensive Nebenprozesse zur Generierung funktioneller Schichten auf Flachglasoberflächen eingespart werden. Durch den vergleichsweise einfachen und kostengünstigen Anlagenaufbau dieser Beschichtungsverfahren ist eine Integration in bereits bestehende Fertigungslinien problemlos möglich. Darüber hinaus können die hohen Substrattemperaturen, welche das Glas während des Herstellungsprozesses durchläuft, hervorragend zur Schichtbildung verwendet werden.

Durch die erfindungsgemäße Beschichtung mittels mehrerer Beschichtungseinrichtungen kann eine gewünschte hohe Schichtdicke der Beschichtung erreicht werden, die mittels einer einzigen Beschichtungseinrichtung bei der relativ hohen Vorschubgeschwindigkeit des Floatglasbandes nicht erzielbar ist. Bei aus dem Stand der Technik bekannter Beschichtung mittels einer großen Anzahl Beschichtungseinrichtungen im gleichen Temperaturbereich wird das Floatglas durch den relativ hohen Energieeintrag in einem Bereich wieder aufgeheizt, wobei es zu Spannungen im Floatglas kommt, die zu Inhomogenitäten bis hin zum Reißen des Floatglases führen können. Im Gegensatz dazu erfolgt im erfindungsgemäßen Verfahren die Beschichtung in voneinander verschiedenen Temperaturbereichen, wobei der Energieeintrag durch jede einzelne der Gruppen von Beschichtungseinrichtungen so gering ist, dass eine Wiedererwärmung weitgehend vermieden wird, so dass kaum Spannungen auftreten.

Bei mehreren Beschichtungseinrichtungen innerhalb einer Gruppe können diese ebenfalls voneinander so voneinander beabstandet sein, dass ihr Energieeintrag in das Floatglasband so gering ist, dass eine Wiedererwärmung weitgehend vermieden wird, so dass kaum Spannungen auftreten.

Die Transporteinrichtung ist meist als ein geschlossener Tunnel ausgestaltet, in den Kühlluft eingeblasen wird. Die Beschichtungseinrichtungen können in im Verlaufe des Tunnels vorgesehenen Fenstern im Tunnel angeordnet sein.

Das erfindungsgemäße Inline-Beschichtungsverfahren eignet sich, um Glasoberflächen mit funktionellen Schichten zu versehen. Die Beschichtung kann unter Normaldruck (auch Atmosphärendruck genannt) erfolgen. Die Abscheidung der Schicht oder mehrerer Schichten auf der Glasoberfläche kann durch eine Flamme oder ein Plasma erfolgen. Die abgeschiedenen Schichten finden beispielsweise Verwendung als Korrosionsschutzschicht und/oder Barriereschicht. Mittels des erfindungsgemäßen Verfahrens kann ein mehrschichtiger Aufbau der Beschichtung realisiert werden.

Das erfindungsgemäße Verfahren kann in den Floatglasproduktionsprozess integriert sein, um die Glasoberfläche wie gewünscht zu modifizieren. Hierbei steht vor allem der Korrosionsschutz im Vordergrund. Es ist bekannt, dass die Oberseite des Floatglases, die nicht mit dem Zinnbad in Berührung kommt (auch Atmosphärenseite genannt) in Verbindung mit Wasser chemisch weitaus aktiver ist als die Zinnbadseite. Korrosion von Flachglas erfolgt daher hauptsächlich an der Atmosphärenseite. Die mittels des erfindungsgemäßen Verfahrens aufgebrachten Schichten werden daher insbesondere auf der Atmosphärenseite aufgebracht, um diese Korrosion der Flachglasoberfläche zu verringern bzw. vollständig zu verhindern. Es ist jedoch auch eine Beschichtung auf der Zinnbadseite oder auf beiden Seiten möglich.

Die abgeschiedenen Schichten können auf vorteilhafte Weise mit weiteren Eigenschaften, wie z.B. Haftvermittlung oder einer Antireflexwirkung, versehen werden.

Beispielsweise kann mindestens eine Siliciumoxid -Schicht (SiOₓ) durch ein Flammenpyrolyse-Verfahren (C-CVD) mittels eines Flammenbrenners zumindest auf der Atmosphärenseite des Flachglases aufgebracht werden. Die Abscheidung kann unter Atmosphärendruck und ohne Schutzgase erfolgen.

Im Falle der Verwendung eines Flammenbrenners als Beschichtungseinrichtung wird im Flammenbrenner aus einem Brenngas eine Flamme erzeugt und dem Brenngas oder der Flamme mindestens ein Precursor zugeführt, wobei mindestens ein Reaktionsprodukt mindestens eines der Precursoren auf einer Oberfläche des Floatglasbandes abgeschieden wird.

Alternativ oder in einem anderen Temperaturbereich kann als Beschichtungseinrichtung eine Plasmaquelle verwendet werden, in der aus einem Arbeitsgas ein Plasma erzeugt und dem Arbeitsgas oder dem Plasma mindestens ein Precursor zugeführt wird, wobei mindestens ein Reaktionsprodukt mindestens eines der Precursoren auf einer Oberfläche des Floatglasbandes abgeschieden wird.

Die Abscheidung in verschiedenen Temperaturbereichen kann bewirken, dass die jeweils abgeschiedenen Schichten oder Teile der Schicht unterschiedliche Eigenschaften aufweisen. Beispielsweise ist eine bei einer hohen Temperatur, bei der das Glas noch plastisch ist, abgeschiedene Schicht besonders dünn und dicht und weist daher gute Barriereeigenschaften auf, die die Diffusion aus dem Glas und/oder in das Glas behindern. Hingegen weist eine bei einer niedrigen Temperatur abgeschiedene Schicht eine höhere Rauhigkeit auf und eignet sich daher als Streuschicht, um Reflexion an der Oberfläche des Glases zu verringern und die Transmission von Licht durch das Glas zu verbessern.

Vor dem Beschichten kann mit einer oder einem im Verlauf des Floatglasbandes vor der ersten Beschichtungsvorrichtung angeordneten Plasmaquelle oder Flammenbrenner eine Aktivierung der Oberfläche des Floatglasbandes durchgeführt werden. Die Flamme oder das Plasma ist dabei undotiert.

Auch die Aktivierung kann in einem Temperaturbereich durchgeführt werden, der von den Temperaturbereichen jeder der Beschichtungseinrichtungen verschieden ist.

In einer Ausführungsform des Verfahrens kann in jeder der Beschichtungseinrichtungen der gleiche Precursor verwendet und das gleiche Reaktionsprodukt abgeschieden werden. Ebenso ist es möglich, in verschiedenen Beschichtungseinrichtungen unterschiedliche Precursoren zu verwenden und entsprechend unterschiedliche Reaktionsprodukte abzuscheiden, so dass unterschiedliche Schichten mit unterschiedlichen Eigenschaften entstehen.

Insbesondere kann ein siliciumhaltiger Precursor, beispielsweise Hexamethyldisiloxan (HMDSO) oder Tetraethylorthosilicat (TEOS) verwendet werden, so dass als Reaktionsprodukt ein Siliciumoxid, insbesondere Siliciumdioxid oder ein modifiziertes Siliciumoxid abgeschieden wird.

Beispielsweise kann eine erste Beschichtung bei einer Temperatur von 450 °C bis 650 °C, insbesondere etwa 500 °C, eine zweite Beschichtung bei einer Temperatur von 200 °C bis 450 °C, insbesondere 250 °C bis 300 °C, vorzugsweise etwa 250 °C und eine dritte Beschichtung bei einer Temperatur von kleiner als 200 °C, vorzugsweise kleiner als 160 °C durchgeführt werden. Eine vierte Beschichtung kann unterhalb dieser Temperatur folgen, beispielsweise bei einer Temperatur von etwa 20 °C. Für die Beschichtungen gewählte benachbarte Temperaturbereiche weisen erfindungsgemäß eine Differenz von 50 °C, vorzugsweise 100 °C oder mehr auf.

Der erste Beschichtungsvorgang kann unmittelbar im Anschluss an einen Herstellungsprozess des Glases stattfinden, wenn das Glas im noch heißen Zustand die Floatwanne verlässt. Die Haftung einer so aufgebrachten Schicht ist besonders gut, da eine frische Glasoberfläche besonders reaktiv ist. Glasoberflächen nehmen relativ schnell Wasser, Kohlendioxid und andere Substanzen aus der Atmosphäre auf und verlieren dabei einen beträchtlichen Teil ihrer Reaktivität.

Wird statt des Flammenbrenners eine Plasmaquelle zum Beschichten verwendet, bewirkt dies, dass das Plasma die heiße Glasoberfläche anders als eine Flamme oder deren Verbrennungsgase weniger stark erwärmt und so eine Verformung, beispielsweise eine Wellenbildung, vermieden wird. Zudem ist der Energieaufwand wesentlich geringer als für eine Beflammung, so dass Kosten reduziert werden. Verglichen mit dem einfachen Aufsprühen einer Beschichtungslösung oder der Ablagerung von Partikeln aus einem Gasstrom, bei denen die für die Reaktion zur Bildung der Schicht erforderliche Energie aus der Wärme des Glases entnommen wird und so, zusammen mit Konvektion, zu einer unerwünscht raschen Abkühlung des Glases führt, liefert das Plasmabeschichtungsverfahren einerseits die Reaktionsenergie und heizt andererseits die Oberfläche nicht zusätzlich auf.

Ein Ausschluss von Luft und Wasserdampf bzw. Reaktionsprodukten daraus ist bei einem Plasmabeschichtungsverfahren im Gegensatz zu einer Beflammung problemlos möglich, beispielsweise durch geeignete Wahl des Arbeitsgases. Auf diese Weise können beispielsweise Luft oder Sauerstoff aus den zu bildenden Schichten und von der Oberfläche ferngehalten werden. Das beschriebene Verfahren ist auch auf einem bereits mit mindestens einer Schicht versehenen Substrat anwendbar.

Die Abscheidung der Schicht kann sowohl bei Beflammung als auch bei Plasmabehandlung bei Atmosphärendruck (auch Normaldruck genannt) stattfinden. Normaldruckplasmaverfahren erfordern einen wesentlich geringeren technischen Aufwand als Niederdruck- oder Vakuumverfahren, da eine zu evakuierende Reaktionskammer entfällt. Beim Normaldruckplasmaverfahren bilden sich die Partikel im Plasmastrom. Die Größe der Agglomerate aus diesen Partikeln und somit wesentliche Eigenschaften der Beschichtung lassen sich unter anderem durch den Abstand der Plasmaquelle von der Oberfläche einstellen. Die Homogenität der abgeschiedenen Schichten ist mit der Homogenität durch Beflammung abgeschiedener Schichten vergleichbar. Alternativ kann das Verfahren auch bei leicht reduziertem Normaldruck durchgeführt werden.

Die Erzeugung des Plasmas kann in einer Freistrahlplasmaquelle erfolgen. Bei diesem Verfahren wird eine Hochfrequenzentladung zwischen zwei konzentrischen Elektroden gezündet, wobei durch einen angelegten Gasstrom das sich bildende Hohlkathodenplasma als Plasmajet aus der Elektrodenanordnung in aller Regel mehrere Zentimeter in den freien Raum und zur zu beschichtenden Oberfläche herausgeführt wird. Der Precursor kann sowohl vor der Anregung in das Arbeitsgas (direct plasma processing) als auch danach in das bereits gebildete Plasma oder in dessen Nähe (remote plasma processing) eingeleitet werden. Eine weitere Möglichkeit der Plasmaerzeugung ist das Ausnutzen einer dielektrisch behinderten Entladung. Dabei wird das als Dielektrikum dienende Arbeitsgas, insbesondere Luft, zwischen zwei Elektroden hindurchgeleitet. Die Plasmaentladung erfolgt zwischen den Elektroden, welche mit hochfrequenter Hochspannung gespeist werden. Ebenso kann das Glassubstrat selbst als Dielektrikum genutzt werden, indem der Gasstrom zwischen einer metallischen Flächenelektrode und dem flachen Gassubstrat hindurch geführt wird.

Der Precursor wird vorzugsweise im gasförmigen Zustand in die Flamme, das Arbeitsgas oder den Plasmastrom eingeleitet. Flüssige oder feste, insbesondere pulverförmige Precursoren sind ebenfalls einsetzbar, werden jedoch bevorzugt vor der Einleitung, beispielsweise durch Verdampfung, in den gasförmigen Zustand oder einen aerosolartigen Zustand überführt. Ebenso kann der Precursor zunächst in ein Trägergas eingeleitet, davon mitgerissen und zusammen mit diesem in die Flamme, das Arbeitsgas oder den Plasmastrom eingeleitet werden.

Der Durchsatz des Brenngases, des Arbeitsgases und/oder des Precursors ist vorzugsweise variabel und steuerbar und/oder regelbar. Insbesondere sind die Durchsätze von Brenngas, Arbeitsgas und Precursor unabhängig voneinander steuerbar und/oder regelbar. Neben dem Abstand der Beschichtungseinrichtung zu der zu beschichtenden Oberfläche steht so ein weiteres Mittel zur Beeinflussung der Schichteigenschaften, wie beispielsweise der Schichtdicke oder der Brechzahl, zur Verfügung. Ebenso sind auf diese Weise Gradientenschichten realisierbar. Durch geeignete Wahl dieser Prozessparameter und der verwendeten Precursoren sind beispielsweise folgende Eigenschaften des Substrats gezielt veränderbar: Kratzfestigkeit, Selbstheilungsfähigkeit, Barriereverhalten, Reflexionsverhalten, Transmissionsverhalten, Brechungsindex, Transparenz, Lichtstreuung, elektrische Leitfähigkeit, antibakterielles Verhalten, Reibung, Haftung, Hydrophilie, Hydrophobie, Oleophobie, Oberflächenspannung, Oberflächenenergie, antikorrosive Wirkung, schmutzabweisende Wirkung, Selbstreinigungsfähigkeit, photokatalytisches Verhalten, Antistressverhalten, Verschleißverhalten, chemische Widerstandsfähigkeit, biozides Verhalten, biokompatibles Verhalten, elektrostatisches Verhalten, elektrochrome Aktivität, photochrome Aktivität, gasochrome Aktivität.

Die abgeschiedene Schicht kann mindestens eine der Komponenten Silicium, Silber, Gold, Kupfer, Eisen, Nickel, Cobalt, Selen, Zinn, Aluminium, Titan, Zink, Zirconium, Tantal, Chrom, Mangan, Molybdän, Wolfram, Bismut, Germanium, Niob, Vanadium, Gallium, Indium, Magnesium, Calcium, Strontium, Barium, Lithium, Lanthanide, Kohlenstoff, Sauerstoff, Stickstoff, Schwefel, Bor, Phosphor, Fluor, Halogene und Wasserstoff enthalten. Insbesondere enthalten die Schichten oxidische oder/und nitridische Verbindungen von Silicium, Titan, Zinn, Aluminium, Zink, Wolfram und Zirconium enthalten.

Als Precursor wird bevorzugt eine siliciumorganische Verbindung verwendet, beispielsweise Hexamethyldisioxan, Tetramethylsilan, Tetramethoxysilan, Tetraethoxysilan, verschiedene ringförmige Siloxane (z.B. Decamethylcyclopentasiloxan). Ebenso können titanorganische Verbindungen, beispielsweise Titantetraisopropylat oder Titantetraisobutylat verwendet werden.

Auf diese Weise sind beispielsweise Barriereschichten realisierbar, die die Durchlässigkeit für Gase, Ionen und Wasser verringern.

In einer Ausführungsform wird eine erste Schicht mit einer Barrierewirkung und anschließend mindestens eine weitere Schicht als Funktionsschicht, vorzugsweise mit mindestens einer der oben genannten Eigenschaften auf einem Kalk-Natrium-Silicatglas (Standard-Floatglas) abgeschieden. Die Barriereschicht verringert zum einen den Durchtritt von Wasser, Kohlendioxid und anderen Substanzen aus der Atmosphäre zur Oberfläche des Glassubstrats. Andererseits wird eine Migration insbesondere von Natrium aus dem Glas in die Funktionsschicht verringert, so dass deren Aktivität erhalten bleibt. Die Funktionsschicht kann dabei mittels des gleichen Verfahrens oder mittels eines anderen Beschichtungsverfahrens auf dem noch heißen oder bereits abgekühlten Glas aufgebracht werden.

Eine erfindungsgemäße Vorrichtung zum Beschichten eines Floatglasbandes im Anschluss an dessen Herstellungsprozess umfasst eine Fördereinrichtung zum Transport des Floatglasbands aus einer Floatglaswanne, wobei mindestens zwei nacheinander entlang der Fördereinrichtung angeordnete Beschichtungseinrichtungen vorgesehen sind, wobei jede der Beschichtungseinrichtungen an einem Ort angeordnet ist, an dem eine Temperatur des Floatglasbandes in einem Temperaturbereich liegt, der von den Temperaturbereichen der anderen Beschichtungseinrichtungen verschieden ist.

Vorteilhafte Ausgestaltungen der Erfindung sind Gegenstand der Unteransprüche.

Ausführungsbeispiele der Erfindung werden im Folgenden anhand einer Zeichnung näher erläutert.

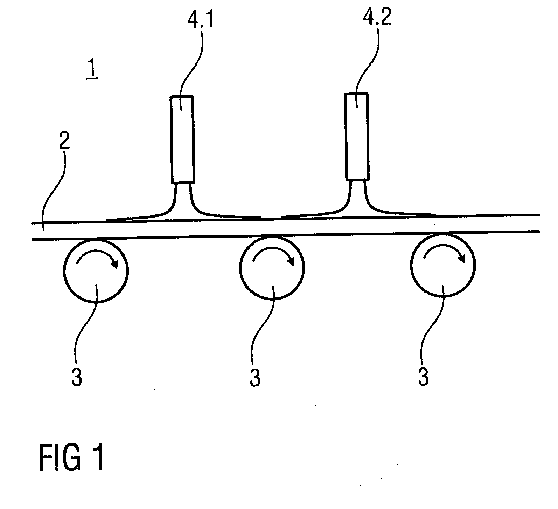

- Figur 1: zeigt eine Vorrichtung zum Beschichten eines Floatglasbandes im Anschluss an dessen Herstellungsprozess, umfassend eine Fördereinrichtung zum Transport des Floatglasbands, wobei zwei nacheinander entlang der Fördereinrichtung angeordnete Beschichtungseinrichtungen vorgesehen sind.

**Figur 1** zeigt eine Vorrichtung 1 zum Beschichten eines Floatglasbandes 2 im Anschluss an dessen Herstellungsprozess. Die Vorrichtung 1 umfasst eine Fördereinrichtung 3 zum Transport des Floatglasbands 2. Die Fördereinrichtung 3 umfasst eine Anzahl von Transportrollen, auf denen das Floatglasband 2 geführt wird. Entlang der Fördereinrichtung 3 sind zwei aufeinander folgend angeordnete Beschichtungseinrichtungen 4.1, 4.2 vorgesehen.

Das Floatglasband 2 wird aus einer nicht dargestellten Floatglaswanne durch die Fördereinrichtung 3 transportiert, beispielsweise durch Ziehen des Floatglasbandes 2 am von der Floatglaswanne entfernten Ende, an dem das Floatglasband 2 bereits weitgehend abgekühlt ist. Die Abkühlung des Floatglasbandes 2 kann passiv oder aktiv mittels Belüftung erfolgen. Durch jede der Beschichtungseinrichtungen 4.1, 4.2 wird eine Beschichtung an einem Ort durchgeführt, an dem eine Temperatur des Floatglasbandes 2 in einem Temperaturbereich liegt, der von den Temperaturbereichen der anderen Beschichtungseinrichtungen 4.2,4.1 verschieden ist.

Beispielsweise wird ein Schichtsystem bestehend aus Nichtmetall- und/oder Metalloxiden und/oder Mischungen daraus abgeschieden. Als Substrat wird im gezeigten Beispiel die Atmosphärenseite des Flachglasbandes 2 verwendet. Ebenso können auch die Zinnbadseite oder beide Seiten beschichtet werden.

Statt der einzelnen Beschichtungseinrichtungen 4.1, 4.2 können jeweils Gruppen von Beschichtungseinrichtungen 4.1 bis 4.n vorgesehen sein, wobei durch jede der Gruppen von Beschichtungseinrichtungen 4.1, 4.2 eine Beschichtung in einem Bereich durchgeführt, in dem eine Temperatur des Floatglasbandes 2 in einem Temperaturbereich liegt, der von den Temperaturbereichen der anderen Gruppen von Beschichtungseinrichtungen 4.2, 4.1 verschieden ist.

### Beispiel 1 - SiOₓ

Es wird ein Siliciumoxid-Schicht-System (SiOₓ) abgeschieden. Die Abscheidung dieses Schichtsystems auf dem Floatglasband 2 kann als Korrosionsschutz, Haftvermittler und Antireflexschicht Anwendung finden. Als Precursorsubstanzen für die flammenpyrolytische Abscheidung dieser Schichten können siliciumorganische Verbindungen, insbesondere HMDSO und TEOS, verwendet werden.

### Beispiel 2 - SiOₓ/ Al₂O₃

Es wird ein mit Aluminiumoxid (Al₂O₃) dotiertes Siliciumoxid-Schicht-System (SiOₓ) abgeschieden. Dieses Schichtsystem dient hauptsächlich als Barriereschicht. Als Precursorsubstanzen für die flammenpyrolytische Abscheidung dieser Schichten können siliciumorganische Verbindungen mit gelösten aluminiumorganischen Verbindungen, zum Beispiel Aluminiumacetylacetonat, verwendet werden.

### Beispiel 3 - SiOₓ/ P₂O₅

Es wird ein mit Phosphoroxid (P₂O₅) dotiertes Siliciumoxid-Schicht-System (SiOₓ) abgeschieden. Auch dieses Schichtsystem dient hauptsächlich als Barriereschicht. Als Precursorsubstanzen für die flammenpyrolytische Abscheidung dieser Schichten können siliciumorganische Verbindungen mit gelösten phosphororganischen Verbindungen, zum Beispiel Triethylphosphat, verwendet werden.

Für die flammenpyrolytische Abscheidung der vorgenannten Beispiele können beispielsweise folgende Parameter verwendet werden:

| | | |
|---|---|---|
| Gas-Mischung: | | Brenngasgemisch (Propan/Luft) |
| Volumenstrom Luft: | | 450 l/min bis 600 l/min |
| Verhältnis Propan/ Luft: | | 1:15 bis 1:25, vorzugsweise 1:20 |
| Brenner: | | 2 Standardbrenner mit 300 mm Breite |
| Substrattemperatur: | | 260 °C, 160 °C und 20 °C |
| Substratgeschwindigkeit: | | 503cm/min bis 880cm/min |
| Substratabstand vom Brenner: | | 20 mm bis 30 mm |
| Brenneranzahl: | | 2 je Temperaturbereich |
| Brennerbreite: | | 300 mm |
| Precursoren: | SiOₓ | HMDSO, TEOS |
| | Al₂O₃ | Aluminiumacetylacetonat |
| | PₓO_{y} | Triethylphosphat |

Bei höherer Brennerbreite sind größere Volumenströme der Luft erforderlich, beispielsweise 5000 l/min bis 7000 l/min bei einer Brennerbreite von 3600 mm.

Als Brenngas können beispielsweise Propan, Butan, Methan, Erdgas verwendet werden. Als Oxidans eignen sich beispielsweise Luft oder Sauerstoff. Die Temperaturbereiche, in denen die Beschichtungseinrichtungen 4.1, 4.2 angeordnet sind, können beispielsweise Substrattemperaturen von 20 °C bis 650 °C aufweisen. Der Abstand der Beschichtungseinrichtung 4.1, 4.2 vom Floatglasband 2 kann beispielsweise zwischen 5 mm und 100 mm liegen. Es kann eine größere Anzahl von Beschichtungseinrichtungen 4.1 bis 4.n vorgesehen sein. Eine Breite der Beschichtungseinrichtung 4.1 bis 4.n ist beispielsweise entsprechend einer Breite des Floatglasbandes 2 gewählt, beispielsweise 3400 mm.

Statt des Flammenbrenners kann als Beschichtungseinrichtung eine Plasmaquelle verwendet werden, in der aus einem Arbeitsgas ein Plasma erzeugt und dem Arbeitsgas oder dem Plasma mindestens ein Precursor zugeführt wird, wobei mindestens ein Reaktionsprodukt mindestens eines der Precursoren auf einer Oberfläche des Floatglasbandes abgeschieden wird.

Für eine homogene und haftfeste Plasmabeschichtung unter Verwendung eines aus beispielsweise 14 Einzeldüsen bestehenden Freistrahlplasmabrenners mit 10cm Behandlungsbreite können beispielsweise folgende Parameter verwendet werden:

| | |
|---|---|
| Anzahl der Durchläufe: | 6 x 10 |
| Versatz senkrecht zur Probentransportrichtung: | 0; 3,5; 7; 7; 3,5; 0 mm |
| Verfahrgeschwindigkeit: | 100 mm/sec |
| Brennerabstand: | 10 mm |
| Precursor: | HMDSO |
| Precursordosis: | 20 ml/min HMDSO-Gas |
| Plasmavoraktivierung: | ja |

Vor dem Beschichten kann mit einer oder einem im Verlauf des Floatglasbandes 2 vor der ersten Beschichtungseinrichtung 4.1 angeordneten Plasmaquelle oder Flammenbrenner eine Aktivierung der Oberfläche des Floatglasbandes 2 durchgeführt werden.

Die Aktivierung kann in einem Temperaturbereich durchgeführt werden, der von den Temperaturbereichen jeder der Beschichtungseinrichtungen 4.1 bis 4.n verschieden ist.

Es kann in jeder der Beschichtungseinrichtungen der gleiche Precursor verwendet und das gleiche Reaktionsprodukt abgeschieden wird. Ebenso ist es möglich, in verschiedenen Beschichtungseinrichtungen 4.1 bis 4.n unterschiedliche Precursoren zu verwenden und entsprechend unterschiedliche Reaktionsprodukte abzuscheiden, so dass unterschiedliche Schichten mit unterschiedlichen Eigenschaften entstehen.

Beispielsweise kann eine erste Beschichtung bei einer Temperatur von 450 °C bis 650 °C, insbesondere etwa 500 °C, eine zweite Beschichtung bei einer Temperatur von 200 °C bis 450 °C, insbesondere 250 °C bis 300 °C, vorzugsweise etwa 250 °C und eine dritte Beschichtung bei einer Temperatur von kleiner als 200 °C, vorzugsweise kleiner als 160 °C durchgeführt werden. Eine vierte Beschichtung kann unterhalb dieser Temperatur folgen, beispielsweise bei einer Temperatur von etwa 20 °C. Für die Beschichtungen gewählte benachbarte Temperaturbereiche können eine Differenz von 50 °C, vorzugsweise 100 °C oder mehr aufweisen.

Die Abscheidung der Schichten kann insbesondere bei Atmosphärendruck durchgeführt werden.

### BEZUGSZEICHENLISTE

- 1: Vorrichtung zum Beschichten eines Floatglasbandes
- 2: Floatglasband
- 3: Fördereinrichtung
- 4.1 bis 4.n: Beschichtungseinrichtung

## Patentansprüche

1. Verfahren zum Beschichten eines Floatglasbandes (2) im Anschluss an dessen Herstellungsprozess, wobei das Floatglasband (2) aus einer Floatglaswanne durch eine Fördereinrichtung (3) transportiert wird, in der das Floatglasband (2) abkühlt und/oder abgekühlt wird, wobei eine Beschichtung in mindestens zwei Gruppen von nacheinander entlang der Fördereinrichtung (3) angeordneten Beschichtungseinrichtungen (4.1 bis 4.n) erfolgt, wobei jede der Gruppen mindestens eine Beschichtungseinrichtung (4.1 bis 4.n) umfasst, **dadurch gekennzeichnet, dass** durch jede der Gruppen eine Beschichtung in einem Bereich des Floatglasbandes (2) durchgeführt wird, in dem eine Temperatur des Floatglasbandes (2) in einem Temperaturbereich liegt, der von den Temperaturbereichen des Floatglasbandes (2) im Bereich der anderen Gruppe oder Gruppen verschieden ist, wobei für die Beschichtungen gewählte benachbarte Temperaturbereiche eine Differenz von 50 °C oder mehr aufweisen.

2. Verfahren nach Anspruch 1, **dadurch gekennzeichnet, dass** als Beschichtungseinrichtung (4.1 bis 4.n) ein Flammenbrenner verwendet wird, in dem aus einem Brenngas eine Flamme erzeugt und dem Brenngas oder der Flamme mindestens ein Precursor zugeführt wird, wobei mindestens ein Reaktionsprodukt mindestens eines der Precursoren auf einer Oberfläche des Floatglasbandes (2) abgeschieden wird.

3. Verfahren nach einem der Ansprüche 1 oder 2, **dadurch gekennzeichnet, dass** als Beschichtungseinrichtung (4.1 bis 4.n) eine Plasmaquelle verwendet wird, in der aus einem Arbeitsgas ein Plasma erzeugt und dem Arbeitsgas oder dem Plasma mindestens ein Precursor zugeführt wird, wobei mindestens ein Reaktionsprodukt mindestens eines der Precursoren auf einer Oberfläche des Floatglasbandes (2) abgeschieden wird.

4. Verfahren nach einem der vorhergehenden Ansprüche, **dadurch gekennzeichnet, dass** vor dem Beschichten mit einer oder einem im Verlauf des Floatglasbandes (2) vor der ersten Beschichtungseinrichtung (4.1) angeordneten Plasmaquelle oder Flammenbrenner eine Aktivierung der Oberfläche des Floatglasbandes (2) durchgeführt wird.

5. Verfahren nach Anspruch 4, **dadurch gekennzeichnet, dass** die Aktivierung in einem Temperaturbereich durchgeführt wird, der von den Temperaturbereichen jeder der Beschichtungseinrichtungen (4.1 bis 4.n) verschieden ist.

6. Verfahren nach einem der vorhergehenden Ansprüche, **dadurch gekennzeichnet, dass** in jeder der Beschichtungseinrichtungen (4.1 bis 4.n) der gleiche Precursor verwendet und das gleiche Reaktionsprodukt abgeschieden wird.

7. Verfahren nach einem der vorhergehenden Ansprüche, **dadurch gekennzeichnet, dass** ein siliciumhaltiger Precursor verwendet wird, so das als Reaktionsprodukt ein Siliciumoxid, insbesondere Siliciumdioxid oder ein modifiziertes Siliciumoxid abgeschieden wird.

8. Verfahren nach einem der vorhergehenden Ansprüche, **dadurch gekennzeichnet, dass** eine erste Beschichtung bei einer Temperatur von 450 °C bis 650 °C, insbesondere etwa 500 °C, eine zweite Beschichtung bei einer Temperatur von 200 °C bis 450 °C, insbesondere 250 °C bis 300 °C, vorzugsweise etwa 250 °C und eine dritte Beschichtung bei einer Temperatur von kleiner als 200 °C, vorzugsweise kleiner als 160 °C durchgeführt werden.

9. Verfahren nach einem der vorhergehenden Ansprüche, **dadurch gekennzeichnet, dass** die Beschichtung bei Atmosphärendruck durchgeführt wird.

10. Vorrichtung (1) zum Beschichten eines Floatglasbandes (2) im Anschluss an dessen Herstellungsprozess, wobei eine Fördereinrichtung (3) zum Transport des Floatglasbands (2) aus einer Floatglaswanne angeordnet ist, wobei mindestens zwei Gruppen von Beschichtungseinrichtungen (4.1 bis 4.n) nacheinander entlang der Fördereinrichtung (3) angeordnet sind, wobei jede der Gruppen mindestens eine Beschichtungseinrichtung (4.1 bis 4.n) umfasst, **dadurch gekennzeichnet, dass** jede der Gruppen an einem Ort angeordnet ist, an dem eine Temperatur des Floatglasbandes (2) in einem Temperaturbereich liegt, der von den Temperaturbereichen des Floatglasbandes (2) im Bereich der anderen Gruppe oder Gruppen verschieden ist, wobei für die Beschichtungen gewählte benachbarte Temperaturbereiche eine Differenz von 50 °C oder mehr aufweisen.

11. Vorrichtung nach Anspruch 10, **dadurch gekennzeichnet, dass** die Beschichtungseinrichtung (4.1 bis 4.n) als ein Flammenbrenner ausgebildet ist, in dem aus einem Brenngas eine Flamme erzeugbar ist, wobei dem Brenngas oder der Flamme mindestens ein Precursor zuführbar ist, wobei mittels des Flammenbrenners mindestens ein Reaktionsprodukt mindestens eines der Precursoren auf einer Oberfläche des Floatglasbandes (2) abscheidbar ist.

12. Vorrichtung nach einem der Ansprüche 10 oder 11, **dadurch gekennzeichnet, dass** die Beschichtungseinrichtung (4.1 bis 4.n) als eine Plasmaquelle ausgebildet ist, in der aus einem Arbeitsgas ein Plasma erzeugbar ist, wobei dem Arbeitsgas oder dem Plasma mindestens ein Precursor zuführbar ist, wobei mittels der Plasmaquelle mindestens ein Reaktionsprodukt mindestens eines der Precursoren auf einer Oberfläche des Floatglasbandes (2) abscheidbar ist.

13. Vorrichtung nach einem der Ansprüche 10 bis 12, **dadurch gekennzeichnet, dass** im Verlauf des Floatglasbandes (2) vor der ersten Beschichtungseinrichtung (4.1) eine Plasmaquelle oder ein Flammenbrenner zur Aktivierung der Oberfläche des Floatglasbandes (2) angeordnet ist.

14. Vorrichtung nach Anspruch 13, **dadurch gekennzeichnet, dass** die Plasmaquelle oder der Flammenbrenner zur Aktivierung an einem Ort angeordnet ist, an dem eine Temperatur des Floatglasbandes (2) in einem Temperaturbereich liegt, der von den Temperaturbereichen jeder der Beschichtungseinrichtungen (4.1 bis 4.n) verschieden ist.

15. Vorrichtung nach einem der Ansprüche 10 bis 14, **dadurch gekennzeichnet, dass** eine erste Gruppe von Beschichtungseinrichtungen (4.1 bis 4.n) an einem Ort angeordnet ist, an dem die Temperatur des Floatglasbandes (2) in einem Temperaturbereich von 450 °C bis 650 °C, insbesondere etwa 500 °C liegt, wobei eine zweite Gruppe von Beschichtungseinrichtungen (4.1 bis 4.n) an einem Ort angeordnet ist, an dem die Temperatur des Floatglasbandes (2) in einem Temperaturbereich von 200 °C bis 450 °C, insbesondere 250 °C bis 300 °C, vorzugsweise etwa 250 °C liegt und wobei eine dritte Gruppe von Beschichtungseinrichtungen (4.1 bis 4.n) an einem Ort angeordnet ist, an dem die Temperatur des Floatglasbandes (2) in einem Temperaturbereich von kleiner als 200 °C, vorzugsweise kleiner als 160 °C liegt.

## Claims

1. Process for coating a float glass strip (2) subsequent to the production process thereof, wherein the float glass strip (2) is transported from a float glass tank through a transport device (3) in which the float glass strip (2) cools and/or is cooled and a coating operation is carried out in at least two groups of coating devices (4.1 to 4.n) arranged in succession along the transport device (3), wherein each of the groups comprises at least one coating device (4.1 to 4.n), **characterized in that** a coating operation is carried out by means of each of the groups in a region of the float glass strip (2) in which a temperature of the float glass strip (2) is in a temperature range which is different from the temperature ranges of the float glass strip (2) in the region of the other group or groups, wherein adjacent temperature ranges selected for the coating operations have a difference of 50°C or more.

2. Process according to Claim 1, **characterized in that** a flame burner in which a flame is produced from a fuel gas and at least one precursor is introduced into the fuel gas or the flame is used as coating device (4.1 to 4.n), with at least one reaction product of at least one of the precursors being deposited on the surface of the float glass strip (2).

3. Process according to Claim 1 or 2, **characterized in that** a plasma source in which a plasma is produced from a working gas and at least one precursor is introduced into the working gas or the plasma is used as coating device (4.1 to 4.n), with at least one reaction product of at least one of the precursors being deposited on the surface of the float glass strip (2).

4. Process according to any of the preceding claims, **characterized in that**, before coating, activation of the surface of the float glass strip (2) is carried out by means of a plasma source or flame burner arranged on the path of the float glass strip (2) before the first coating device (4.1).

5. Process according to Claim 4, **characterized in that** the activation is carried out in a temperature range which is different from the temperature ranges of each of the coating devices (4.1 to 4.n).

6. Process according to any of the preceding claims, **characterized in that** the same precursor is used and the same reaction product is deposited in each of the coating devices (4.1 to 4.n).

7. Process according to any of the preceding claims, **characterized in that** a silicon-containing precursor is used so that a silicon oxide, in particular silicon dioxide, or a modified silicon oxide is deposited as reaction product.

8. Process according to any of the preceding claims, **characterized in that** a first coating operation is carried out at a temperature of from 450°C to 650°C, in particular about 500°C, a second coating operation is carried out at a temperature of from 200°C to 450°C, in particular from 250°C to 300°C, preferably about 250°C, and a third coating operation is carried out at a temperature of less than 200°C, preferably less than 160°C.

9. Process according to any of the preceding claims, **characterized in that** the coating operation is carried out at atmospheric pressure.

10. Apparatus (1) for coating a float glass strip (2) subsequent to the production process therefor, wherein a transport device (3) is arranged for transporting the float glass strip (2) from a float glass tank and at least two groups of coating devices (4.1 to 4.n) are arranged in succession along the transport device (3), wherein each of the groups comprises at least one coating device (4.1 to 4.n), **characterized in that** each of the groups is arranged at a place at which a temperature of the float glass strip (2) is in a temperature range which is different from the temperature ranges of the float glass strip (2) in the region of the other group or groups, wherein adjacent temperature ranges selected for the coating operations have a difference of 50°C or more.

11. Apparatus according to Claim 10, **characterized in that** the coating device (4.1 to 4.n) is configured as a flame burner in which a flame is able to be produced from a fuel gas with at least one precursor being able to be introduced into the fuel gas or the flame and at least one reaction product of at least one of the precursors being able to be deposited on the surface of the float glass strip (2) by means of the flame burner.

12. Apparatus according to Claim 10 or 11, **characterized in that** the coating device (4.1 to 4.n) is configured as a plasma source in which a plasma is able to be produced from a working gas with at least one precursor being able to be introduced into the working gas or the plasma, wherein at least one reaction product of at least one of the precursors is able to be deposited on the surface of the float glass strip (2) by means of the plasma source.

13. Apparatus according to any of Claims 10 to 12, **characterized in that** a plasma source or a flame burner for activating the surface of the float glass strip (2) is arranged on the path of the float glass strip (2) before the first coating device (4.1).

14. Apparatus according to Claim 13, **characterized in that** the plasma source or the flame burner for activation is arranged at a place at which a temperature of the float glass strip (2) is in a temperature range which is different from the temperature ranges of each of the coating devices (4.1 to 4.n).

15. Apparatus according to any of Claims 10 to 14, **characterized in that** a first group of coating devices (4.1 to 4.n) is arranged at a place at which the temperature of the float glass strip (2) is in a temperature range from 450°C to 650°C, in particular about 500°C, wherein a second group of coating devices (4.1 to 4.n) is arranged at a place at which the temperature of the float glass strip (2) is in a temperature range from 200°C to 450°C, in particular from 250°C to 300°C, preferably about 250°C, and a third group of coating devices (4.1 to 4.n) is arranged at a place at which the temperature of the float glass strip (2) is in a temperature range below 200°C, preferably below 160°C.

## Revendications

1. Procédé de revêtement d'un ruban de verre flotté (2) après son procédé de fabrication, le ruban de verre flotté (2) étant transporté hors d'un bassin de verre flotté par un dispositif de transport (3) dans lequel le ruban de verre flotté (2) refroidit et/ou est refroidi, un revêtement ayant lieu dans au moins deux groupes de dispositifs de revêtement (4.1 à 4.n) agencés les uns après les autres le long du dispositif de transport (3), chacun des groupes comprenant au moins un dispositif de revêtement (4.1 à 4.n), **caractérisé en ce qu'**un revêtement est réalisé par chacun des groupes dans une zone du ruban de verre flotté (2) dans laquelle une température du ruban de verre flotté (2) se situe dans une plage de température qui est différente des plages de température du ruban de verre flotté (2) dans la zone du ou des autres groupes, des plages de température voisines choisies pour les revêtements présentant une différence de 50 °C ou plus.

2. Procédé selon la revendication 1, **caractérisé en ce qu'**un brûleur à flamme est utilisé en tant que dispositif de revêtement (4.1 à 4.n), dans lequel une flamme est générée à partir d'un gaz de combustion et au moins un précurseur est introduit dans le gaz de combustion ou la flamme, au moins un produit de réaction d'au moins un des précurseurs étant déposé sur une surface du ruban de verre flotté (2).

3. Procédé selon l'une quelconque des revendications 1 ou 2, **caractérisé en ce qu'**une source de plasma est utilisée en tant que dispositif de revêtement (4.1 à 4.n), dans laquelle un plasma est généré à partir d'un gaz de travail et au moins un précurseur est introduit dans le gaz de travail ou le plasma, au moins un produit de réaction d'au moins un des précurseurs étant déposé sur une surface du ruban de verre flotté (2).

4. Procédé selon l'une quelconque des revendications précédentes, **caractérisé en ce qu'**une activation de la surface du ruban de verre flotté (2) est réalisée avant le revêtement avec une source de plasma ou un brûleur à flamme agencé sur le trajet du ruban de verre flotté (2) avant le premier dispositif de revêtement (4.1).

5. Procédé selon la revendication 4, **caractérisé en ce que** l'activation est réalisée dans une plage de température qui est différente des plages de température de chacun des dispositifs de revêtement (4.1 à 4.n).

6. Procédé selon l'une quelconque des revendications précédentes, **caractérisé en ce que** le même précurseur est utilisé et le même produit de réaction est déposé dans chacun des dispositifs de revêtement (4.1 à 4.n).

7. Procédé selon l'une quelconque des revendications précédentes, **caractérisé en ce qu'**un précurseur contenant du silicium est utilisé, de sorte qu'un oxyde de silicium, notamment le dioxyde de silicium ou un oxyde de silicium modifié, soit déposé en tant que produit de réaction.

8. Procédé selon l'une quelconque des revendications précédentes, **caractérisé en ce qu'**un premier revêtement est réalisé à une température de 450 °C à 650 °C, notamment d'environ 500 °C, un deuxième revêtement à une température de 200 °C à 450 °C, notamment de 250 °C à 300 °C, de préférence d'environ 250 °C, et un troisième revêtement à une température inférieure à 200 °C, de préférence inférieure à 160 °C.

9. Procédé selon l'une quelconque des revendications précédentes, **caractérisé en ce que** le revêtement est réalisé à pression atmosphérique.

10. Dispositif (1) pour le revêtement d'un ruban de verre flotté (2) après son procédé de fabrication, un dispositif de transport (3) étant agencé pour le transport du ruban de verre flotté (2) hors d'un bassin de verre flotté, au moins deux groupes de dispositifs de revêtement (4.1 à 4.n) étant agencés les uns après les autres le long du dispositif de transport (3), chacun des groupes comprenant au moins un dispositif de revêtement (4.1 à 4.n), **caractérisé en ce que** chacun des groupes est agencé à un emplacement auquel une température du ruban de verre flotté (2) se situe dans une plage de température qui est différente des plages de température du ruban de verre flotté (2) dans la zone du ou des autres groupes, des plages de température voisines choisies pour les revêtements présentant une différence de 50 °C ou plus.

11. Dispositif selon la revendication 10, **caractérisé en ce que** le dispositif de revêtement (4.1 à 4.n) est configuré sous la forme d'un brûleur à flamme, dans lequel une flamme peut être générée à partir d'un gaz de combustion, au moins un précurseur pouvant être introduit dans le gaz de combustion ou la flamme, au moins un produit de réaction d'au moins un des précurseurs pouvant être déposé sur une surface du ruban de verre flotté (2) au moyen du brûleur à flamme.

12. Dispositif selon l'une quelconque des revendications 10 ou 11, **caractérisé en ce que** le dispositif de revêtement (4.1 à 4.n) est configuré sous la forme d'une source de plasma, dans laquelle un plasma peut être généré à partir d'un gaz de travail, au moins un précurseur pouvant être introduit dans le gaz de travail ou le plasma, au moins un produit de réaction d'au moins un des précurseurs pouvant être déposé sur une surface du ruban de verre flotté (2) au moyen de la source de plasma.

13. Dispositif selon l'une quelconque des revendications 10 à 12, **caractérisé en ce qu'**une source de plasma ou un brûleur à flamme pour l'activation de la surface du ruban de verre flotté (2) est agencé sur le trajet du ruban de verre flotté (2) avant le premier dispositif de revêtement (4.1).

14. Dispositif selon la revendication 13, **caractérisé en ce que** la source de plasma ou le brûleur à flamme pour l'activation est agencé à un emplacement auquel une température du ruban de verre flotté (2) se situe dans une plage de température qui est différente des plages de température de chacun des dispositifs de revêtement (4.1 à 4.n).

15. Dispositif selon l'une quelconque des revendications 10 à 14, **caractérisé en ce qu'**un premier groupe de dispositifs de revêtement (4.1 à 4.n) est agencé à un emplacement auquel la température du ruban de verre flotté (2) se situe dans une plage de température allant de 450 °C à 650 °C, notamment d'environ 500 °C, un deuxième groupe de dispositifs de revêtement (4.1 à 4.n) étant agencé à un emplacement auquel la température du ruban de verre flotté (2) se situe dans une plage de température allant de 200 °C à 450 °C, notamment de 250 °C à 300 °C, de préférence d'environ 250 °C, et un troisième groupe de dispositifs de revêtement (4.1 à 4.n) étant agencé à un emplacement auquel la température du ruban de verre flotté (2) se situe dans une plage de température inférieure à 200 °C, de préférence inférieure à 160 °C.
